# EUROPÄISCHE PATENTSCHRIFT

(11) **EP 2 851 319 B1**
(45) Veröffentlichungstag und Bekanntmachung des Hinweises auf die Patenterteilung: **16.08.2017**
(21) Anmeldenummer: 14185867.0
(22) Anmeldetag: 23.09.2014
(51) Int. Cl.: B65G 47/91, B25J 15/06

(54) **Sauggreifer**
Suction gripper
Pince aspirante

(30) Priorität: 23.09.2013 DE 202013008334 U
(43) Veröffentlichungstag der Anmeldung: 25.03.2015
(73) Patentinhaber: Seger GmbH, 66709 Weiskirchen (DE)
(72) Erfinder: Seger, Andreas, 66709 Weiskirchen (DE)
(74) Vertreter: Isfort, Olaf

(56) Entgegenhaltungen:
- US-A- 3 556 578
- US-A- 4 787 662

## Beschreibung

Die Erfindung betrifft einen Sauggreifer zum Greifen von Stückgut, mit einer evakuierbaren Saugkammer und einer auf das zu greifende Stückgut aufsetzbaren Lochplatte, wobei die Lochplatte eine Mehrzahl von Sauglöchern aufweist, wobei die Sauglöcher über Saugkanäle mit der Saugkammer gasdurchlässig verbunden sind.

Ein solcher Sauggreifer ist aus der US 4 787 662 A bekannt, die den Oberbegriff des Anspruchs 1 offenbart. Nachteilig an dem hier beschriebenen Sauggreifer ist, dass sich dieser nur bedingt reinigen lässt, da die Saugkanäle einen sich reduzierenden Querschnitt aufweisen, so dass sich diese leicht mit Staub zusetzen.

Die US 3 556 578 A beschreibt eine Greifvorrichtung mit einer Vakuumkammer, wobei die Vakuumkammer von einer steifen Platte bedeckt ist und an der Platte eine gelöcherte Membran aus einem elastischen und flexiblen Material angeordnet ist.

Aus dem Stand der Technik sind zudem Sauggreifer bekannt, die eine evakuierbare Saugkammer und eine Lochplatte aufweisen. Die Lochplatte ist dabei mit einer Vielzahl von Sauglöchern versehen. Damit der Sauggreifer das Stückgut aufnehmen kann, wird zunächst die Lochplatte auf das Stückgut aufgesetzt, beispielsweise mittels eines den Sauggreifer tragenden Roboterarms. Dabei müssen sämtliche Sauglöcher auf der Stückgutoberfläche vollständig aufliegen und durch diese möglichst luftdicht verschlossen sein. Die Saugkammer, die an der Unterseite durch auf die Lochplatte abgeschlossen ist, wird evakuiert. Der dadurch entstehende Unterdruck in den durch die Stückgutoberfläche abgedichteten Sauglöchern bewirkt, dass das Stückgut angesaugt wird und angehoben, d.h. gegriffen werden kann.

Für derartige Sauggreifer erweisen sich Stückgutoberflächen, die uneben beschaffen sind oder Aussparungen aufweisen, als problematisch. Die Unebenheiten oder Aussparungen führen dazu, dass nicht alle Sauglöcher auf der Stückgutoberfläche dichtend aufliegen. Ein Vakuum kann entsprechend nicht erzeugt werden, da ständig Luft durch die offenen Sauglöcher in die Saugkammer einströmt. Das Stückgut kann also nicht gegriffen werden. Herkömmliche Sauggreifer können aus den genannten Gründen nur dann das Stückgut zuverlässig greifen, wenn alle Sauglöcher auf der Stückgutoberfläche dichtend aufliegen, um den zum Anheben erforderlichen Unterdruck aufzubauen. Dies ist bei Stückgütern, deren Oberfläche Unebenheiten oder Aussparungen aufweist, nicht zu erreichen. Solche Stückgutoberflächen findet man zum Beispiel bei Spulen (Reels), die in SMD-Bestückungsautomaten zur Zuführung von elektronischen Bauteilen zum Einsatz kommen. Zur automatisierten Handhabung solcher Spulen steht bisher kein geeigneter Greifer zur Verfügung.

Aufgabe der Erfindung ist es daher, einen leicht zu reinigenden Sauggreifer bereitzustellen, der dazu geeignet ist, Stückgut aufzunehmen, dessen Oberfläche Unebenheiten oder Aussparungen aufweist, insbesondere Spulen für SMD-Bestückungsautomaten.

Diese Aufgabe wird ausgehend von einem Sauggreifer der eingangs genannten Art dadurch gelöst, dass der Durchmesser der Sauglöcher 1 bis 10 mm und der Durchmesser der Saugkanäle 0,1 bis 0,5 mm beträgt, wobei die Saugkanäle in einer Zwischenplatte ausgebildet sind, die zwischen Saugkammer und Lochplatte angeordnet ist, wobei die Saugkanäle einen konstanten Querschnitt in der Zwischenplatte aufweisen.

Der Vorteil des erfindungsgemäßen Sauggreifers besteht darin, dass nur ein Teil der Sauglöcher auf der Oberfläche des Stückguts dichtend aufliegen muss, um das Stückgut greifen zu können. Unter Umständen reicht es bereits, wenn lediglich 10-20% der Sauglöcher auf der Stückgutoberfläche dichtend aufliegen. Damit kann Stückgut zuverlässig gegriffen werden, auch wenn dessen unebene oder Aussparungen aufweisende Oberfläche dazu führt, dass nur ein (kleiner) Teil der Sauglöcher dichtend aufliegt, in dem der zum Anheben erforderlichen Unterdruck aufgebaut wird. Durch die Saugkanäle, die einen kleineren Querschnitt aufweisen als die Sauglöcher, wird die Luftmenge begrenzt, die durch die offenen Sauglöcher direkt in die Saugkammer einströmt und den Unterdruck ausgleichen würde. Ein Druckausgleich findet nicht statt, da die durch die engen Saugkanäle begrenzte Luftmenge, die in die Saugkammer einströmt, dadurch kompensiert werden kann, dass die Saugkammer hinreichend groß bemessen wird (Pufferfunktion) und mittels Vakuumpumpe oder Ejektordüse permanent nachevakuiert wird.

Erfindungsgemäß sind die Saugkanäle in eine Zwischenplatte eingebracht, die zwischen der Saugkammer und der Lochplatte angeordnet ist. Neben konstruktiven Vorteilen bietet diese Ausführungsform die Möglichkeit, die Zwischenplatte aus einem anderen Material herzustellen als die Lochplatte. Während die Lochplatte eine gute Saug- und Dichtwirkung erzeugen soll und daher idealerweise aus einem elastischen Material besteht, sollte die Zwischenplatte eine konstruktiv stabile Verbindung mit der Saugkammer eingehen und besteht idealerweise aus einem entsprechend festen Werkstoff (Kunststoff oder Metall). Die Anordnung der Zwischenplatte zwischen Saugkammer und Lochplatte bietet eine einfache Reinigungsmöglichkeit des Sauggreifers. Da der Durchmesser der Sauglöcher 1 bis 10 mm und der Durchmesser der Saugkanäle 0,1 bis 0,5 mm beträgt und die Saugkanäle einen konstanten Querschnitt in der Zwischenplatte aufweisen kann die Lochplatte zur Reinigung von der Zwischenplatte leicht abgenommen werden, um festsitzenden Staub aus den Sauglöchern zu entfernen. Durch Verkleben kann beispielsweise die Lochplatte mit der Zwischenplatte verbunden werden. Der Verbund aus Zwischenplatte und Lochplatte bildet dann die Unterseite der Saugkammer, sodass die Lochplatte von oben auf das zu greifende Stückgut aufgesetzt werden kann.

Die Sauglöcher und die Saugkanäle sind erfindungsgemäß zylindrisch geformt. Zylinderförmige Löcher können fertigungstechnisch auf einfache Weise z. B. durch Bohren erzeugt werden. Zudem weisen zylinderförmige Löcher und Kanäle günstige Strömungseigenschaften auf.

Vorzugsweise ist jedem Saugloch ein Saugkanal zugeordnet. Vorteil dieser Anordnung ist die Begrenzung der Luftmasse eines Sauglochs durch genau einen Saugkanal.

Insbesondere sind die Saugkanäle und die Sauglöcher paarweise koaxial angeordnet. Neben einer symmetrischen und möglichst laminaren Strömung erweist sich dadurch auch der vereinfachte Fertigungsprozess als vorteilhaft. Werden die Saugkanäle und die Sauglöcher beispielsweise durch Bohren erzeugt, sind die Bohrpositionen für beide Bohrbilder identisch.

Es hat sich gezeigt, dass der Sauggreifer, insbesondere zum Greifen von Spulen für SMD-Bestückungsautomaten, gut und zuverlässig funktioniert, wenn die Sauglöcher einen Durchmesser von 1 bis 10 mm und die Saugkanäle einen Durchmesser von 0,1 bis 0,5 mm aufweisen. Dieser Durchmesser der Sauglöcher ermöglicht es, bis zu hundert oder sogar mehr Sauglöcher an der Lochplatte anzuordnen. Der Abstand der Sauglöcher entspricht dabei etwa dem ein- bis zweifachen des Sauglochdurchmessers. Im Regelfall saugen dann etwa 20-50 Sauglöcher auf der Spulenoberfläche an und die Greiffunktion ist sicher gewährleistet. Der genannte Durchmesser der Saugkanäle ist deutlich kleiner als der Durchmesser der Sauglöcher, so dass der Luftstrom von den (nicht dichtend aufliegenden) Sauglöchern in die Saugkammer hinreichend verengt ist. Andererseits reicht der Durchmesser aus, um einen hinreichend schnellen Aufbau des Unterdrucks in den tatsächlich ansaugenden Sauglöchern zu gewährleisten. Ein Verhältnis von Sauglochdurchmesser zu Saugkanaldurchmesser von 100:1 bis 2:1, vorzugsweise 20:1 bis 5:1 hat sich in der Praxis bewährt.

Die für SMD-Bestückungsautomaten vorgesehenen Spulen weisen in der Regel radial gerichtete Speichen auf, wobei die Sauglöcher, die sich beim Greifvorgang im Bereich des Zwischenraums zwischen den Speichen befinden, nicht ansaugen können. Entsprechend sind die Sauglöcher bei dem erfindungsgemäßen Sauggreifer zweckmäßig entlang radial verlaufender Linien an der (vorzugsweise kreisförmigen) Lochplatte angeordnet. Dies gewährleistet, dass möglichst viele Sauglöcher ansaugen.

Die Lochplatte des erfindungsgemäßen Sauggreifers besteht bevorzugt aus einem elastischen Material, vorzugsweise Schaumgummi. Als Kunststoff kann z. B. Polyurethan verwendet werden. Der besondere Vorteil von elastischem Material ist die Dichtwirkung. Rauigkeiten oder leichtere Unebenheiten auf der Stückgutoberfläche werden durch die elastische Lochplatte ausgeglichen und beeinträchtigen die dichtende Anlage an der Stückgutoberfläche nicht.

Die Saugkammer weist bevorzugt einen Gasauslass auf, über den die Saugkammer mit einer Ejektordüse verbunden ist. Ejektoren werden typischerweise in Industrierobotern eingesetzt und sind ein bewährtes Mittel zur Vakuumerzeugung. Ihre Vorteile sind unter anderem eine schnelle Vakuumerzeugung und eine kompakte Bauweise. Ebenso benötigen Ejektoren keine rotierenden Komponenten, wie dies bei den klassischen Vakuumpumpen der Fall ist, und sind daher wartungs- und verschleißarm.

Der erfindungsgemäße Sauggreifer eignet sich hervorragend als Aktor beispielsweise bei Lager- oder Bestückungsautomaten. Durch die Anordnung der Saugkammer und der Lochplatte an einem Roboterarm kann auf praktische Art und Weise das Stückgut aufgenommen und mittels des Roboterarms zur gewünschten Stelle befördert werden.

Ein Ausführungsbeispiel der Erfindung wird im Folgenden anhand der Zeichnung näher erläutert. Es zeigt:

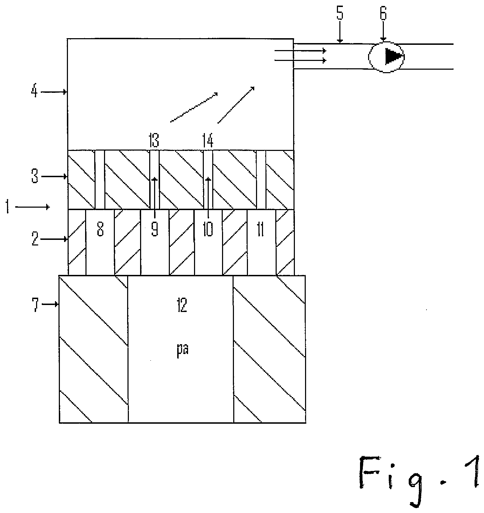

- Figur 1: einen schematischen Längsschnitt durch einen erfindungsgemäßen Sauggreifer.

Die Zeichnung zeigt einen Längsschnitt durch einen erfindungsgemäßen Sauggreifer 1, aufgesetzt auf ein Stückgut 7. Der Sauggreifer 1 umfasst eine Lochplatte 2, eine Zwischenplatte 3 und ein Saugkammer 4. Der Verbund aus Lochplatte 2 und Zwischenplatte 3 schließt die Saugkammer 4 an der Unterseite gasdicht ab. Das Stückgut 7 weist in der Mitte eine Aussparung 12 (z. B. eine Bohrung) auf.

Das Evakuieren der Saugkammer 4 erfolgt durch eine Pumpe 6. Die Luft strömt dabei über eine Gasauslassleitung 5 aus der Saugkammer 4 aus.

Während die äußeren Saugöffnungen 8 und 11 bei dem dargestellten Beispiel vollständig und damit dichtend auf dem Stückgut 7 aufliegen, befinden sich die mittleren Saugöffnungen 9 und 10 über der Aussparung 12 und sind entsprechend nicht gegenüber der Umgebung abgedichtet. In den Saugöffnungen 9 und 10 sowie in der Aussparung 12 herrscht annähernd Atmosphärendruck pa. Damit der zum sicheren Greifen erforderliche Unterdruck in der Saugkammer 4 sowie in den Saugöffnungen 8 und 11 nicht zusammenbricht, begrenzen die Saugkanäle 13 und 14, die einen deutlich kleineren Querschnitt aufweisen als die Saugöffnungen 9 und 10, die Luftmenge, die durch die Saugöffnungen 9 und 10 in die Saugkammer 4 einströmt (gekennzeichnet durch die Pfeile). Der Unterdruck kann somit durch die Pumpe 6 über die Gasauslassleitung 5 aufrechterhalten werden.

## Patentansprüche

1. Sauggreifer zum Greifen von Stückgut, mit einer evakuierbaren Saugkammer (4) und einer auf das zu greifende Stückgut (7) aufsetzbaren Lochplatte (2), wobei die Lochplatte (2) eine Mehrzahl von Sauglöchern (8, 9, 10, 11) aufweist, wobei die Sauglöcher (8,9, 10, 11) über Saugkanäle (13, 14) mit der Saugkammer (4) gasdurchlässig verbunden sind, wobei die Saugkanäle (13, 14) einen kleineren Querschnitt aufweisen als die Sauglöcher (8, 9, 10, 11), wobei der Durchmesser der Sauglöcher (8, 9, 10, 11) 1 bis 10 mm und der Durchmesser der Saugkanäle (13, 14) 0,1 bis 0,5 mm beträgt, wobei die Saugkanäle (13, 14) in einer Zwischenplatte (3) ausgebildet sind, die zwischen Saugkammer (4) und Lochplatte (2) angeordnet ist, und wobei die Sauglöscher (8, 9,10,11) und die Saugkanäle (13, 14) zylindrisch geformt sind, **dadurch gekennzeichnet, dass** die Saugkanäle (13, 14) einen konstanten Querschnitt in der Zwischenplatte (3) aufweisen.

2. Sauggreifer nach Anspruch 1, **dadurch gekennzeichnet, dass** der Verbund aus Zwischenplatte (3) und Lochplatte (2) die Unterseite der Saugkammer (4) bildet.

3. Sauggreifer nach einem der Ansprüche 1 bis 2, **dadurch gekennzeichnet, dass** jedem Saugloch (8, 9, 10, 11) ein Saugkanal (13, 14) zugeordnet ist.

4. Sauggreifer nach Anspruch 3, **dadurch gekennzeichnet, dass** die Saugkanäle (13, 14) und die Sauglöcher (8, 9, 10, 11) paarweise koaxial angeordnet ist.

5. Sauggreifer nach einem der Ansprüche 1 bis 4, **dadurch gekennzeichnet, dass** die Lochplatte (2) aus einem elastischen Material besteht, vorzugsweise aus Schaumgummi.

6. Sauggreifer nach einem der Anspruch 1 bis 5, **dadurch gekennzeichnet, dass** die Saugkammer (4) einen Gasauslass aufweist, über den die Saugkammer (4) mit einer Ejektordüse verbunden ist.

7. Sauggreifer nach einem der Ansprüche 1 bis 6, **dadurch gekennzeichnet, dass** die Saugkammer (4) und die Lochplatte (2) an einem Roboterarm angeordnet sind.

## Claims

1. Suction gripper for gripping articles, having an evacuable suction chamber (4) and a perforated plate (2) which can be positioned on the article (7) which is to be gripped, wherein the perforated plate (2) has a plurality of suction holes (8, 9, 10, 11), wherein the suction holes (8, 9, 10, 11) are connected to the suction chamber (4) in a gas-permeable manner via suction channels (13, 14), wherein the suction channels (13, 14) have a smaller cross section than the suction holes (8, 9, 10, 11), wherein the diameter of the suction holes (8, 9, 10, 11) is 1 to 10 mm and the diameter of the suction channels (13, 14) is 0.1 to 0.5 mm, wherein the suction channels (13, 14) are formed in an intermediate plate (3), which is arranged between the suction chamber (4) and perforated plate (2), and wherein the suction holes (8, 9, 10, 11) and the suction channels (13, 14) are of cylindrical form, **characterized in that** the suction channels (13, 14) have a constant cross section in the intermediate plate (3).

2. Suction gripper according to Claim 1,
**characterized in that** the assembly made up of the intermediate plate (3) and perforated plate (2) forms the underside of the suction chamber (4).

3. Suction gripper according to either of Claims 1 and 2,
**characterized in that** each suction hole (8, 9, 10, 11) is assigned a suction channel (13, 14).

4. Suction gripper according to Claim 3,
**characterized in that** the suction channels (13, 14) and the suction holes (8, 9, 10, 11) are arranged coaxially in pairs.

5. Suction gripper according to one of Claims 1 to 4,
**characterized in that** the perforated plate (2) consists of an elastic material, preferably of foam rubber.

6. Suction gripper according to one of Claims 1 to 5,
**characterized in that** the suction chamber (4) has a gas outlet, via which the suction chamber (4) is connected to an ejector nozzle.

7. Suction gripper according to one of Claims 1 to 6,
**characterized in that** the suction chamber (4) and the perforated plate (2) are arranged on a robot arm.

## Revendications

1. Pince aspirante pour saisir des pièces, comprenant une chambre d'aspiration (4) pouvant être évacuée et une plaque perforée (2) pouvant être placée sur la pièce (7) à saisir, la plaque perforée (2) présentant une pluralité de trous d'aspiration (8, 9, 10, 11), les trous d'aspiration (8, 9, 10, 11) étant reliés de manière perméable aux gaz à la chambre d'aspiration (4) par le biais de canaux d'aspiration (13, 14), les canaux d'aspiration (13, 14) présentant une plus petite section transversale que les trous d'aspiration (8, 9, 10, 11), le diamètre des trous d'aspiration (8, 9, 10, 11) étant de 1 à 10 mm et le diamètre des canaux d'aspiration (13, 14) étant de 0,1 à 0,5 mm, les canaux d'aspiration (13, 14) étant réalisés dans une plaque intermédiaire (3) qui est disposée entre la chambre d'aspiration (4) et la plaque perforée (2), et les trous d'aspiration (8, 9, 10, 11) et les canaux d'aspiration (13, 14) ayant une forme cylindrique, **caractérisée en ce que** les canaux d'aspiration (13, 14) présentent une section transversale constante dans la plaque intermédiaire (3).

2. Pince aspirante selon la revendication 1, **caractérisée en ce que** l'assemblage constitué de la plaque intermédiaire (3) et de la plaque perforée (2) forme le côté inférieur de la chambre d'aspiration (4).

3. Pince aspirante selon l'une quelconque des revendications 1 à 2, **caractérisée en ce qu'**un canal d'aspiration (13, 14) est associé à chaque trou d'aspiration (8, 9, 10, 11).

4. Pince aspirante selon la revendication 3, **caractérisée en ce que** les canaux d'aspiration (13, 14) et les trous d'aspiration (8, 9, 10, 11) sont disposés coaxialement par paires.

5. Pince aspirante selon l'une quelconque des revendications 1 à 4, **caractérisée en ce que** la plaque perforée (2) se compose d'un matériau élastique, de préférence de caoutchouc mousse.

6. Pince aspirante selon l'une quelconque des revendications 1 à 5, **caractérisée en ce que** la chambre d'aspiration (4) présente une sortie de gaz par le biais de laquelle la chambre d'aspiration (4) est connectée à une buse d'éjection.

7. Pince aspirante selon l'une quelconque des revendications 1 à 6, **caractérisée en ce que** la chambre d'aspiration (4) et la plaque perforée (2) sont disposées sur un bras de robot.
